# EUROPEAN PATENT APPLICATION

(11) **EP 3 267 280 A1**
(43) Date of publication of application: **10.01.2018**
(21) Application number: 16758955.5
(22) Date of filing: 02.03.2016
(51) Int. Cl.: G05G 5/03, B60K 26/02

(54) **REACTION FORCE OUTPUT DEVICE**

(30) Priority: 04.03.2015 JP 2015042296
(71) Applicant: Honda Lock MFG. Co., Ltd., Miyazaki-City, Miyazaki 880-0293 (JP)
(72) Inventor: KOUZUMA, Hiroyuki, Miyazaki-shi Miyazaki 880-0293 (JP); HIROTANI, Kohei, Miyazaki-shi Miyazaki 880-0293 (JP); OOBA, Takashi, Miyazaki-shi Miyazaki 880-0293 (JP)
(74) Representative: Weickmann & Weickmann PartmbB
(86) International application number: PCT/JP2016/056411
(87) International publication number: WO 2016/140262

(57) **Abstract**

The reaction force output device (10) includes a drive source (12) configured to output power to an operation portion (4) in a direction opposite to an operating direction thereof; and a clutch mechanism (17) interposed between the operation portion (4) and the drive source (12) and configured to connect and disconnect transmission of the power to the operation portion (4), wherein the clutch mechanism (17) includes a first rotating body (25) connected to the drive source (12) side and to which the power of the drive source (12) is transmitted, a second rotating body (26) connected to the operation portion (4) side, disposed coaxially with the first rotating body (25) and configured to be relatively rotatable with respect to the first rotating body (25), a clutch lever (36) rotatably supported by the first rotating body (25), and a plurality of engagement portions (41) disposed at the second rotating body (26) in a circumferential direction thereof and engaged with the clutch lever (36).

## Description

### [Technical Field]

The present disclosure relates to a reaction force output device.

Priority is claimed on Japanese Patent Application No. 2015-042296 filed March 4, 2015, the content of which is incorporated herein by reference.

### [Background Art]

A reaction force output device which applies a reaction force corresponding to a depressed state to an accelerator pedal to suppress excess depression of the accelerator pedal during starting or running a vehicle is known (for example, refer to the following Patent Literature 1).

In an accelerator pedal apparatus disclosed in Patent Literature 1, a return spring for returning an accelerator pedal to an initial position, a motor for generating a reaction force and a transmission lever for transmitting rotation of the motor to the accelerator pedal are built in a housing which rotatably supports a base end of the accelerator pedal. In the accelerator pedal apparatus, the motor is controlled by a driving force corresponding to a depressed state of an accelerator pedal, and the driving force is applied to the accelerator pedal through the transmission lever.

### [Citation List]

### [Patent Literature]

[Patent Literature 1]
Japanese Unexamined Patent Application, First Publication No. 2010-111379

### [Summary of Invention]

### [Technical Problem]

However, in the above-described constitution of Patent Literature 1, since a shaft of the transmission lever for outputting the reaction force to a pedal arm and a rotation shaft of the motor as a drive source are directly connected, rotational friction on a motor side acts as rotation resistance of the transmission lever in a return direction when the accelerator pedal is suddenly returned. Accordingly, follow-up of the transmission lever with respect to the accelerator pedal is delayed. If the follow-up of the transmission lever with respect to the accelerator pedal is greatly delayed, a space may be generated between the accelerator pedal and the transmission lever, and when the accelerator pedal is depressed again from that state, there is concern of the reaction force output by the motor being delayed.

An aspect of the present invention has been made in view of such circumstances, and an object of the present invention is to provide a reaction force output device which is capable of increasing responsiveness when a reaction force is output, thereby enhancing an operation feeling and also reducing an impact sound generated upon engagement between a clutch lever and an engagement portion.

### [Solution to Problem]

In order to achieve the aforementioned objects, the present disclosure adopts the following embodiment.
(1) A reaction force output device according to one embodiment of the present disclosure includes a drive source configured to output power to an operation portion in a direction opposite to an operating direction thereof; and a clutch mechanism interposed between the operation portion and the drive source and configured to connect and disconnect transmission of the power to the operation portion, wherein the clutch mechanism includes a first rotating body connected to the drive source side and to which the power of the drive source is transmitted, a second rotating body connected to the operation portion side, disposed coaxially with the first rotating body and configured to be relatively rotatable with respect to the first rotating body, a clutch lever rotatably supported by one rotating body of the first rotating body and the second rotating body, and a plurality of engagement portions disposed at the other rotating body of the first rotating body and the second rotating body in a circumferential direction thereof and engaged with the clutch lever, the clutch lever rotates about a rotation shaft different from that of the one rotating body and extends in a direction intersecting a radial direction when viewed in plan view in an axial direction of the one rotating body, and a tip end surface thereof serves as an engagement surface engaged with the engagement portion, the engagement portion presses the clutch lever in an extending direction of the clutch lever through the engagement surface and is engaged with the clutch lever when the one rotating body rotates before the other rotating body, and a circumference of the rotation shaft of the clutch lever presses the clutch lever and releases engagement of the clutch lever when the other rotating body rotates before the one rotating body.
   According to the above-described embodiment (1), when the other rotating body rotates before the one rotating body, the engagement portion presses the clutch lever of the one rotating body with a circumference of the rotation shaft and releases engagement with the engagement portion. In this case, for example, when the operation portion is suddenly returned in a return direction (a direction opposite to an operating direction), a connection state between the one rotating body and the other rotating body is released. Accordingly, it is possible to inhibit movement of the operation portion in the return direction from being hindered by rotational friction on a drive source side. Therefore, it is possible to promptly follow a return motion of the operation portion, and even when the operation portion is depressed again immediately thereafter, an output of the reaction force by the drive source can be quickly applied to the operating portion.
   In particular, when the one rotating body rotates before the other rotating body in the return direction, the engagement portion presses the clutch lever in the extending direction and is engaged with the clutch lever, and thus the engagement portion and the clutch lever are easily engaged with each other, for example, compared with a constitution in which the clutch lever and the engagement portion are engaged in a rotating direction of the clutch lever. Accordingly, it is possible to reduce a height in a radial direction of the other rotating body of the engagement portion, thereby narrowing a pitch between the adjacent engagement portions in the circumferential direction. Therefore, the clutch lever and the engagement portion can be quickly engaged, and thus an idling amount between the one rotating body and the other rotating body can be reduced.
   As a result, responsiveness of the reaction force output device can be improved, an operation feeling can be improved, and an impact sound generated when the clutch lever and the engagement portion are engaged can be reduced.
   Moreover, according to the embodiment (1), since the clutch lever extends in a direction intersecting the radial direction of the one rotating body, a rotation range of the clutch lever can be reduced, for example, compared with a constitution in which the clutch lever extends in the radial direction of the one rotating body. Therefore, the impact sound generated when the clutch lever and the engagement portion are engaged can be reduced.
(2) In the above-described embodiment (1), the engagement surface may be a curved surface which protrudes outward in the extending direction of the clutch lever.
   In the case of the embodiment (2), since the engagement surface of the clutch lever is formed as the curved surface which protrudes outward in the extending direction, the clutch lever is pressed toward a center of curvature of the engagement surface at a contact portion between the engagement surface and the engagement portion. Therefore, the clutch lever can be effectively pressed in the extending direction, and the engagement portion and the clutch lever can be more easily engaged.
(3) In the above-described embodiment (1) or (2), the adjacent engagement portions in the circumferential direction may be connected through the curved portion.
   In the case of the embodiment (3), since the adjacent engagement portions in the circumferential direction are connected through the curved portion, the engagement portions are smoothly connected to each other. Accordingly, the pitch between the engagement portions can be narrowed, and the clutch lever and the engagement portion can be quickly engaged.
(4) In any one of the above-described embodiments (1) to (3), a control circuit configured to control driving of the drive source may be provided, and the control circuit may drive the drive source and may engage the engagement surface of the clutch lever with the engagement portion when it is determined that the driving of the drive source is stopped for a predetermined time.

In the case of the embodiment (4), even in the case in which a circumferential space is generated between the clutch lever and the engagement portion when the driving of the drive source is stopped, the space can be filled up by the time of the depressing operation or the control of the reaction force after that. Accordingly, when the first rotating body and the second rotating body relatively rotate in a direction in which the engagement surface of the clutch lever and the engagement portion approach each other, the idling amount of each of the first rotating body and the second rotating body is reduced, and the clutch lever and the engagement portion are rapidly engaged with each other.

As a result, it is possible to improve the responsiveness of the reaction force output device, to improve the operation feeling and to reduce the impact sound generated when the clutch lever and the engagement portion are engaged.

### [Advantageous Effects of Invention]

According to the embodiments of the present disclosure, it is possible to increase responsiveness when a reaction force is output, thereby enhancing an operation feeling.

### [Brief Description of Drawings]

Fig. 1 is a side view of an accelerator pedal apparatus of one embodiment.
Fig. 2 is a view illustrating an internal structure of a reaction force output device of the present disclosure.
Fig. 3 is an exploded perspective view of a clutch mechanism.
Fig. 4 is a cross-sectional view illustrating an internal structure of the clutch mechanism.
Fig. 5 is an enlarged view of a portion V of Fig. 4.
Fig. 6 is an explanatory view illustrating an operation when the operation pedal is depressed and is a plan view of the reaction force output device in a state in which a housing is removed.
Fig. 7 is an explanatory view illustrating the operation when the operation pedal is depressed and is a view corresponding to Fig. 4.
Fig. 8 is an explanatory view illustrating an operation when a reaction force is controlled and is a view corresponding to Fig. 6.
Fig. 9 is an explanatory view illustrating the operation when the reaction force is controlled and is a view corresponding to Fig. 4.
Fig. 10 is an explanatory view illustrating the operation when the reaction force is controlled and is a view corresponding to Fig. 4.
Fig. 11 is an explanatory view illustrating an operation of the operation pedal when the pedal is returned and is a view corresponding to Fig. 6.
Fig. 12 is an explanatory view illustrating the operation when the pedal is returned and is a view corresponding to Fig. 4.
Fig. 13 is a time chart illustrating idling suppression control.
Fig. 14 is a flowchart illustrating the idling suppression control.
Fig. 15 is an explanatory view illustrating a space filling operation and is an enlarged view of the clutch lever and the engagement portion.

### [Description of Embodiments]

Preferred embodiments of the present disclosure will be described with reference to the accompanying drawings. In the following description, a case in which a reaction force output device of the present disclosure is installed at an accelerator pedal apparatus of a vehicle will be described.

### [Accelerator pedal apparatus]

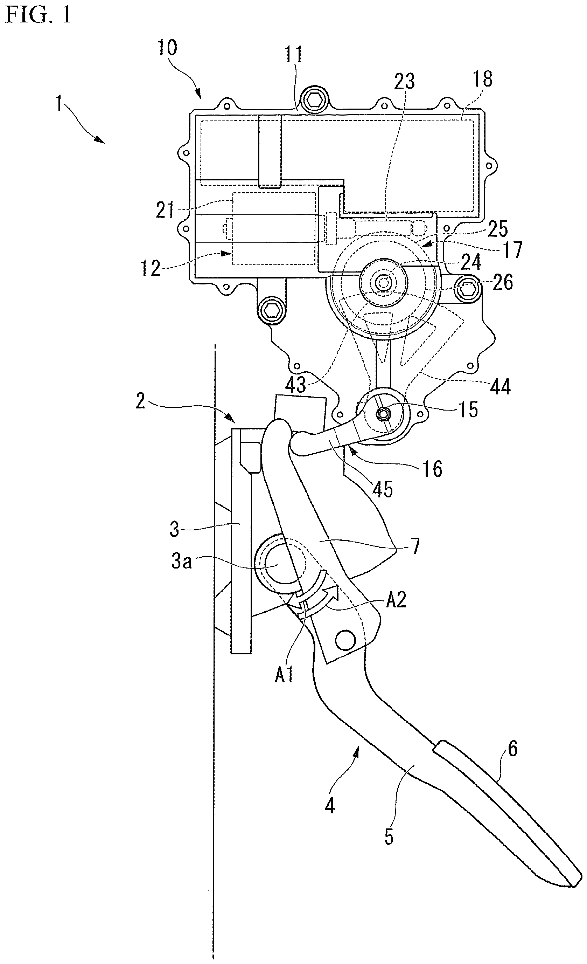

Fig. 1 is a side view of an accelerator pedal apparatus 1 of one embodiment.

As illustrated in Fig. 1, the accelerator pedal apparatus 1 includes a pedal unit 2 which is installed in a foot area of a driver's seat and a reaction force output device 10 which is connected to the pedal unit 2.

### <Pedal unit>

The pedal unit 2 includes a holding base 3 which is installed in a vehicle body and an operation pedal (an operation portion) 4 which is rotatably connected to a support shaft 3a provided on the holding base 3.

A return spring which biases the operation pedal 4 toward an initial position thereof and is not illustrated in the drawing is interposed between the holding base 3 and the operation pedal 4.

The operation pedal 4 includes a pedal arm 5 of which a base end is supported in the form of a cantilever by the above-mentioned support shaft 3a, a pedal portion 6 which is provided at a tip end of the pedal arm 5 to be depressed by a driver, and a reaction force transmission lever 7 which is connected to the base end of the pedal arm 5.

A cable which is not illustrated in the drawing and serves to operate an opening degree of a throttle valve of an internal combustion engine which is not illustrated according to an operation amount (a turning angle) of the pedal arm 5 is connected to the operation pedal 4. However, when the internal combustion engine employs an electronically controlled throttle, a rotation sensor for sensing a rotation angle of the pedal arm 5 may be provided at the pedal unit 2, and the opening degree of the throttle valve may be controlled on the basis of a sensing signal of the rotation sensor.

The reaction force transmission lever 7 extends in a direction substantially opposite to an extending direction of the pedal arm 5 and rotates integrally with the pedal arm 5. Specifically, a base end of the reaction force transmission lever 7 is connected to the base end of the pedal arm 5, and a tip end thereof is connected to an output lever 45 of the reaction force output device 10 which will be described later.

### <Reaction force output device>

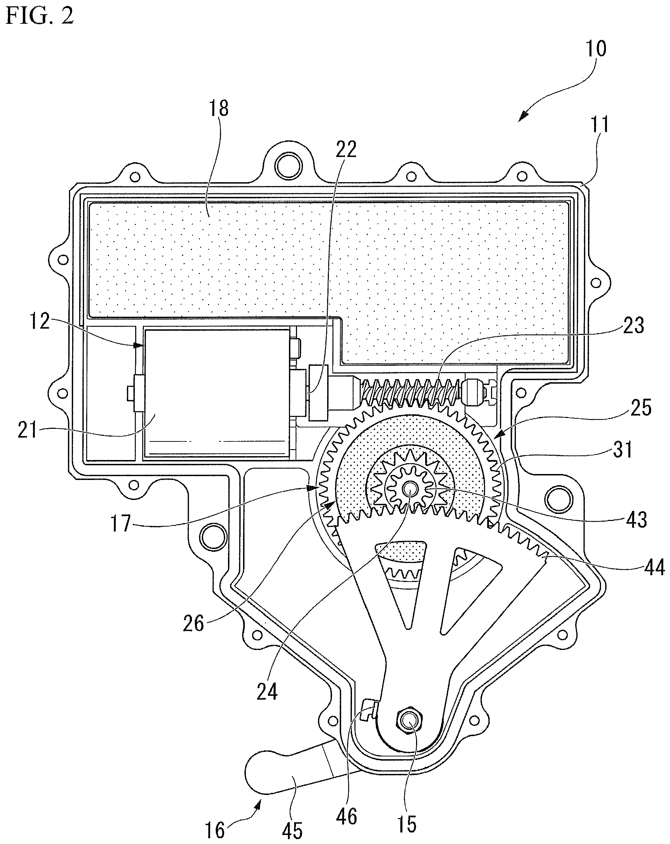

Fig. 2 is a view illustrating an internal structure of the reaction force output device 10.

As illustrated in Fig. 2, the reaction force output device 10 includes a motor (a drive source) 12, a reaction force output part 16 having an output shaft 15 which outputs a driving force of the motor 12 toward the operation pedal 4, and a clutch mechanism 17 which is interposed between the operation pedal 4 and the motor 12 to connect and disconnect transmission of the driving force to the operation pedal 4. Additionally, the reaction force output device 10 is configured so that the above-described elements are accommodated in a housing 11. Further, a reference numeral 18 of Fig. 2 is a circuit board on which a control circuit for driving the motor 12 is mounted.

The motor 12 includes a motor case 21 for accommodating a rotor and a stator which are not illustrated, and a rotation shaft 22 which is fixed to the rotor and protrudes from the motor case 21. A worm 23 connected to the clutch mechanism 17 is connected to a portion of the rotation shaft 22 which protrudes from the motor case 21. Also, in the following description, a direction along the rotation shaft 22 of the motor 12 may be referred to as a rotation shaft direction, and a direction along the output shaft 15 may be referred to as an output shaft direction.

A rotation sensor, such as a hole IC or the like, which is not illustrated is installed at the motor 12. The hole IC detects a magnetic flux density which varies according to rotation of the motor 12 and outputs the detected magnetic flux density as a pulsed voltage. A rotation amount (e.g., a rotation number) or the like of the motor 12 can be detected on the basis of the output voltage.

Further, the rotation of the motor 12 (the rotor) is controlled by the control circuit mounted on the circuit board 18. A controller area network (CAN) cable for transmitting and receiving signals to and from a host electronic control unit (ECU) and the control circuit is connected to the circuit board 18. Furthermore, the circuit board 18 and the motor 12 are connected to each other through a cable, and the rotation of the motor 12 is controlled on the basis of a control signal transmitted from the circuit board 18.

The clutch mechanism 17 includes a first rotating body 25 which is rotatably supported by a support pin 24 erected from the housing 11, and a second rotating body 26 which is coaxial with the first rotating body 25 and is supported by the support pin 24 to rotate with respect to the first rotating body 25. Also, the support pin 24 extends in parallel with the output shaft 15.

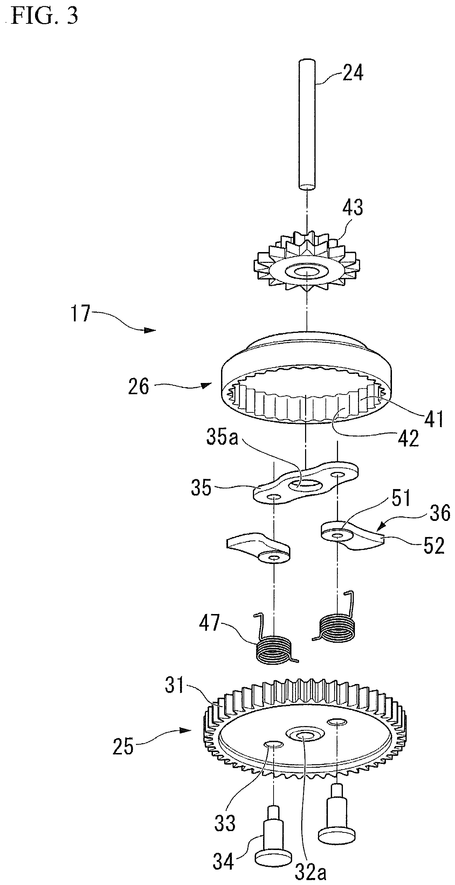

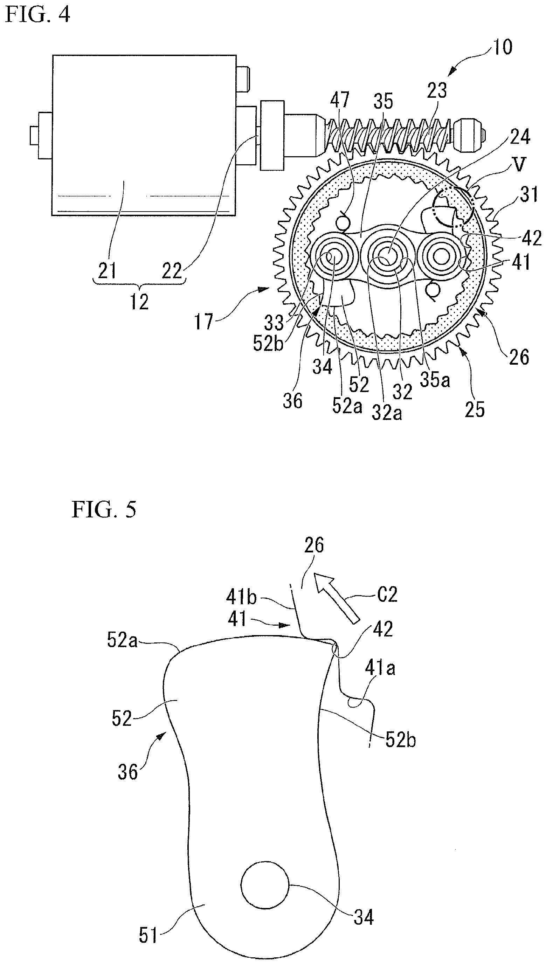

Fig. 3 is an exploded perspective view of the clutch mechanism 17. Fig. 4 is a cross-sectional view illustrating an internal structure of the clutch mechanism 17.

As illustrated in Figs. 3 and 4, the first rotating body 25 is formed in a bottomed cylindrical shape disposed coaxially with the supporting pin 24 and is opened toward the second rotating body 26. A worm gear 31 which is engaged with the above-described worm 23 is formed on an outer circumferential surface of a cylindrical portion of the first rotating body 25.

A boss portion 32 protrudes from a bottom wall portion of the first rotating body 25 toward the second rotating body 26. Additionally, the above-described support pin 24 is inserted into a shaft hole 32a formed in the boss portion 32. A pair of through-holes 33 passing through the bottom wall portion in the output shaft direction are formed in portions of the bottom wall portion of the first rotating body 25 which are located on both sides of the boss portion 32 in a radial direction. A clutch shaft 34 which rotatably supports a clutch lever 36 (which will be described in detail) is inserted into each of the through-holes 33 from a side opposite to the second rotating body 26 with respect to the first rotating body 25.

A clutch plate 35 which holds the clutch lever 36 between the first rotating body 25 and the clutch plate 35 in the output shaft direction is fixed to an end of the clutch shaft 34 which is located on the second rotating body 26 side. The clutch plate 35 is formed in a band shape having a lengthwise direction along a radial direction of the first rotating body 25, and an insertion hole 35a (refer to Fig. 3) through which the above-described boss portion 32 is inserted is formed in a center portion thereof. Additionally, the clutch shaft 34 is caulked and fixed to each of portions of the clutch plate 35 which are located on both sides of the insertion hole 35a.

The second rotating body 26 is formed in a bottomed cylindrical shape of which an outer diameter is smaller than that of the first rotating body 25, and is accommodated in the first rotating body 25 while an open end side thereof faces the first rotating body 25. A plurality of engagement portions 41 which protrude inward in a radial direction are formed in a cylindrical portion of the second rotating body 26 to be spaced apart from each other at intervals in a circumferential direction thereof.

Fig. 5 is an enlarged view of a portion V of Fig. 4.

As illustrated in Figs. 4 and 5, each of the engagement portions 41 is formed in a semicircular shape which protrudes inward in the radial direction when viewed in plan view in the output shaft direction. Specifically, in the engagement portion 41, a front side surface thereof in a rotating direction of the first rotating body 25 (a return direction C2 of the first rotating body 25 illustrated in Fig. 5) during driving of the motor 12 is formed as a curved surface 41a which is curved toward a top portion thereof. Meanwhile, an inner surface of the engagement portion 41 in the return direction C2 of the first rotating body 25 is formed as an inclined surface 41b which extends inward in the radial direction toward the top portion. Also, the engagement portions 41 adjacent to each other in the circumferential direction are connected through a curved portion 42 which protrudes outward in the radial direction. Accordingly, the engagement portions 41 are smoothly connected to each other through the curved portion 42.

As illustrated in Figs. 2 and 3, a pinion gear 43 which connects the clutch mechanism 17 and the reaction force output part 16 is installed at a bottom wall portion of the second rotating body 26. The pinion gear 43 is disposed coaxially with the second rotating body 26, and a base end thereof is embedded and fixed (spline-fitted) in the bottom wall portion of the second rotating body 26.

As illustrated in Fig. 2, the reaction force output part 16 includes the output shaft 15 which is rotatably supported by the housing 11, and a sector gear 44 and an output lever 45 which are fixed to the output shaft 15.

The output shaft 15 is provided to pass through the housing 11, and one end thereof in the output shaft direction protrudes from the housing 11.

The sector gear 44 is formed in a fan shape when viewed in plan view in the output shaft direction, and an outer circumference edge thereof is engaged with the pinion gear 43. The sector gear 44 is accommodated in the housing 11 and is fixed to a portion of the output shaft 15 located inside the housing 11. Also, a coil spring 46 which biases the reaction force output part 16 toward an initial position is interposed between the sector gear 44 and the housing 11.

A base end of the output lever 45 is fixed to one end (a portion protruding from the housing 11) of the output shaft 15 so that the output lever 45 is rotatable together with the sector gear 44. A tip end of the output lever 45 is capable of coming in contact with a tip end of the reaction force transmission lever 7 of the above-described operation pedal 4 in a rotating direction. In this case, the output lever 45 and the reaction force transmission lever 7 come in contact with each other when the operation pedal 4 is depressed by a driver. Also, the output lever 45 and the reaction force transmission lever 7 may be configured to always be in contact with each other.

Here, as illustrated in Figs. 4 and 5, the above-described clutch lever 36 is formed in a flat plate shape which extends in a direction (in the illustrated example, in a direction orthogonal to one direction of the radial direction which passes through centers of the clutch shaft 34 and the support pin 24) intersecting the radial direction when viewed in plan view in the output shaft direction. The clutch lever 36 rotates around a rotation shaft (a clutch shaft) 34 different from the rotation shaft 22 of the first rotating body 25 and extends from the rotation shaft 34 in a direction intersecting the radial direction of the first rotating body 25.

The clutch lever 36 rotates around a center of the clutch shaft 34 serving as a rotation center in a direction (a radial direction) in which it approaches and moves away from the cylindrical portion of the second rotating body 26. Specifically, the clutch lever 36 rotates between an engagement position at which the clutch lever 36 is engaged with the engagement portion 41 and an engagement release position at which the engagement with the engagement portion 41 is released. Further, a biasing member 47 which biases the clutch lever 36 toward the engagement position is interposed between the clutch lever 36 and the first rotating body 25.

The clutch lever 36 includes a base portion 51 which is located at a base end thereof in an extending direction and in which the clutch shaft 34 is inserted, and a claw portion 52 which is located at a tip end thereof in the extending direction and is engaged with the above-described engagement portion 41.

The claw portion 52 is gradually widened toward a tip end side thereof. In this case, a tip end surface of a side surface of the claw portion 52 in an extending direction faces the curved surface 41a of the above-described engagement portion 41 in the return direction C2 of the first rotary body 25 and serves as an engagement surface 52a in which the engagement portion 41 is engaged in the extending direction of the clutch lever 36. The engagement surface 52a is formed in an arc shape which protrudes outward in the extending direction. The engagement surface 52a of the embodiment is formed in the arc shape of which a center of curvature is the rotation center (the center of the clutch shaft 34) of the clutch lever 36.

Further, a surface which is a part of the side surface of the claw portion 52 and continues to an outside in the radial direction with respect to the engagement surface 52a serves as a sliding surface 52b on which the inclined surface 41b of the engagement portion 41 slides. The sliding surface 52b extends outward in the radial direction toward the tip end of the clutch lever 36 in the extending direction. Also, a corner portion formed by the engagement surface 52a and the sliding surface 52b of the claw portion 52 is formed in a pointed shape which is tapered toward an outside in the radial direction and is positioned on a rotational locus of the engagement portion 41 at an engagement position at which the claw portion 52 is engaged with the engagement portion 41. Meanwhile, a corner portion formed by a surface of the side surface of the claw portion 52 which continues inward to the engagement surface 52a in the radial direction with respect to the engagement surface 52a and the engagement surface 52a has a curved surface which protrudes inward in the radial direction.

### [Operation]

Next, an operation of the above-described accelerator pedal apparatus 1 will be described.

### <When pedal is depressed>

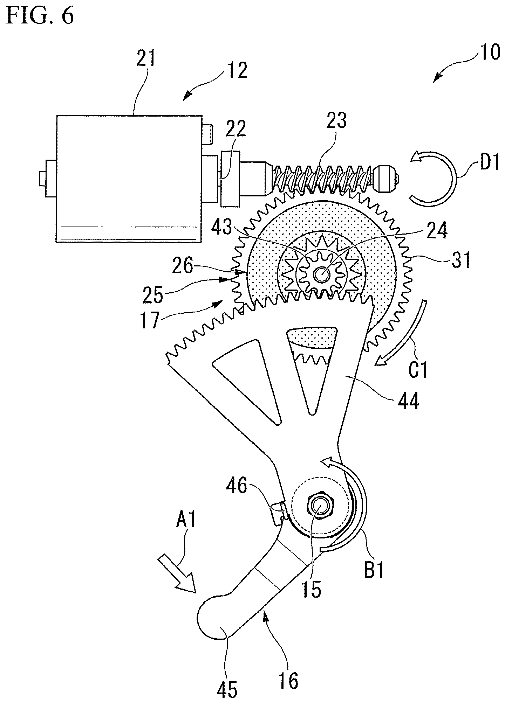

Fig. 6 is an explanatory view illustrating an operation when the operation pedal 4 is depressed and is a plan view of the reaction force output device 10 in a state in which the housing 11 is removed.

As illustrated in Fig. 6, when the operation pedal 4 is depressed by the driver, the operation pedal 4 rotates from an initial position in a depression direction A1 (counterclockwise in Fig. 1) around the support shaft 3a, and the opening degree of the throttle valve of the internal combustion engine is adjusted according to a rotation angle thereof. When the operation pedal 4 rotates in the depression direction A1, the reaction force transmission lever 7 comes in contact with the output lever 45 of the reaction force output part 16 and rotates the reaction force output part 16 in a depression direction B1 (counterclockwise in Fig. 6) around the output shaft 15.

When the reaction force output part 16 rotates, a rotational force thereof is transmitted to the pinion gear 43 through the sector gear 44 of the reaction force output part 16. Then, the second rotating body 26 rotates before the first rotating body 25 in a depression direction C1 around the support pin 24.

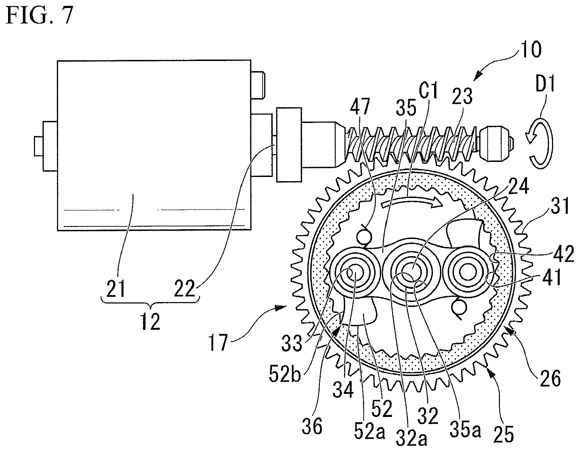

Fig. 7 is an explanatory view illustrating the operation when the operation pedal 4 is depressed and is a view corresponding to Fig. 4.

Here, as illustrated in Fig. 7, since the clutch lever 36 is biased toward the engagement position by the biasing member 47, the curved surface 41a of the engagement portion 41 comes in contact with the engagement surface 52a of the clutch lever 36 when the second rotating body 26 rotates in the depression direction C1. Then, the clutch lever 36 is pressed in a normal direction (an extending direction of the clutch lever 36) of the engagement surface 52a at a contact portion between the engagement surface 52a and the curved surface 41a of the engagement portion 41. In this case, since the engagement surface 52a is formed in the arc shape with the rotation center of the clutch lever 36 as a center thereof, a pressing force is applied toward the rotation center of the clutch lever 36. Accordingly, the clutch lever 36 and the engagement portion 41 are engaged with each other in the extending direction (a direction intersecting a rotating direction of the clutch lever 36) of the clutch lever 36. As a result, the first rotating body 25 and the second rotating body 26 are connected through the clutch lever 36 and the engagement portion 41, and a rotational force of the second rotating body 26 is transmitted to the first rotating body 25. Therefore, the first rotating body 25 rotates together with the second rotating body 26 in the depression direction C1.

Additionally, a rotational force of the first rotating body 25 is transmitted to the rotation shaft 22 through the worm 23, and thus the worm 23 and the rotation shaft 22 rotate in a depression direction D1 (a direction opposite to the rotating direction of the motor 12).

### <When reaction force is controlled>

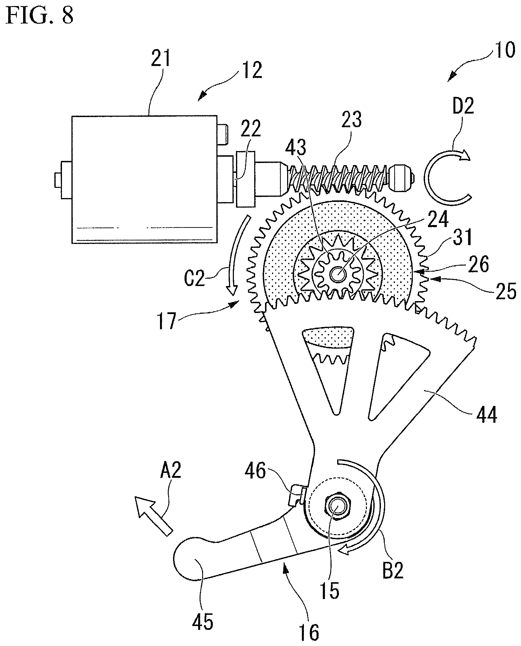

Fig. 8 is an explanatory view illustrating an operation when the reaction force is controlled and is a view corresponding to Fig. 6.

During the above-described depressing operation, when it is determined that the depressing operation is excessively performed according to a depression speed of the operation pedal 4 and a driving situation of a vehicle, control of the reaction force by the reaction force output device 10 starts. Specifically, as illustrated in Fig. 8, the motor 12 of the reaction force output device 10 is driven, and the rotation shaft 22 rotates in a return direction D2 (the rotating direction of the motor 12). Then, the driving force of the motor 12 is transmitted to the first rotating body 25 through the worm 23, and the first rotating body 25 rotates before the second rotating body 26 in the return direction C2 around the support pin 24.

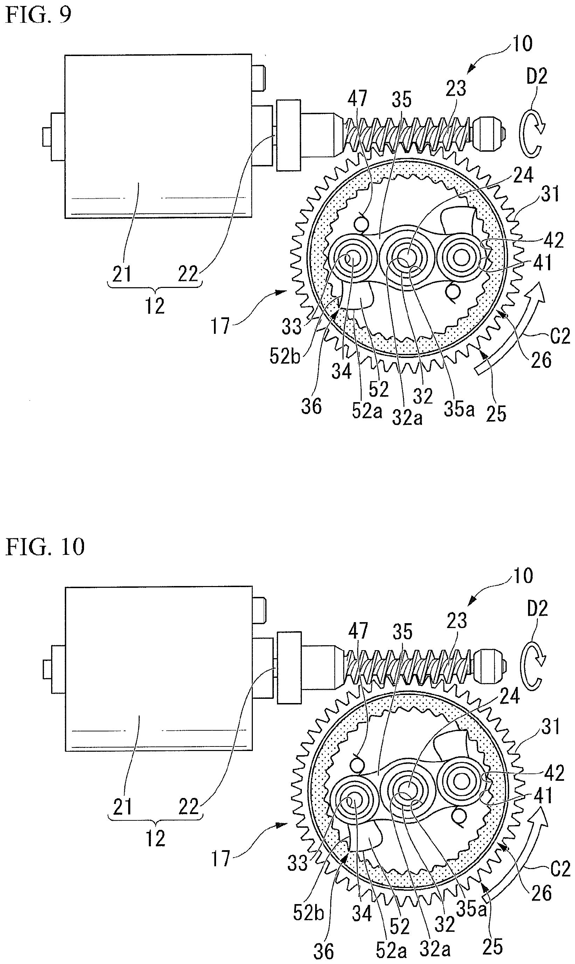

Figs. 9 and 10 are explanatory views illustrating the operation when the reaction force is controlled and are views corresponding to Fig. 4.

As illustrated in Fig. 9, when the first rotating body 25 rotates in the return direction C2, the engagement surface 52a of the clutch lever 26 comes in contact with the curved surface 41a of the engagement portion 41. At this point, the clutch lever 36 is pressed in the normal direction of the engagement surface 52a at the contact portion between the engagement surface 52a and the curved surface 41a of the engagement portion 41, and thus the clutch lever 36 and the engagement portion 41 are engaged with each other in the extending direction of the clutch lever 36. Accordingly, the first rotating body 25 and the second rotating body 26 are connected to each other through the clutch lever 36 and the engagement portion 41, and the rotational force of the first rotating body 25 is transmitted to the second rotating body 26. Therefore, as illustrated in Fig. 10, the second rotating body 26 rotates together with the first rotating body 25 in the return direction C2.

Additionally, as illustrated in Fig. 8, the rotational force of the second rotating body 26 is transmitted to the reaction force output part 16 through the sector gear 44, and thus the reaction force output part 16 rotates in a return direction B2 around the output shaft 15. When the reaction force output part 16 rotates in the return direction B2, a rotational force thereof is transmitted to the reaction force transmission lever 7 of the operation pedal 4 through the output lever 45. Additionally, a rotational force in a return direction A2 is transmitted to the operation pedal 4 through the reaction force transmission lever 7. At this point, a driving force according to the depression speed and the driving situation of the vehicle is applied as a reaction force from the reaction force output device 10 to the operation pedal 4. As a result, information such as an accelerating state of the internal combustion engine and the "excessive depressing operation" is transmitted to the driver through the sole of his/her foot stepping on the pedal portion 6.

### <When pedal is returned>

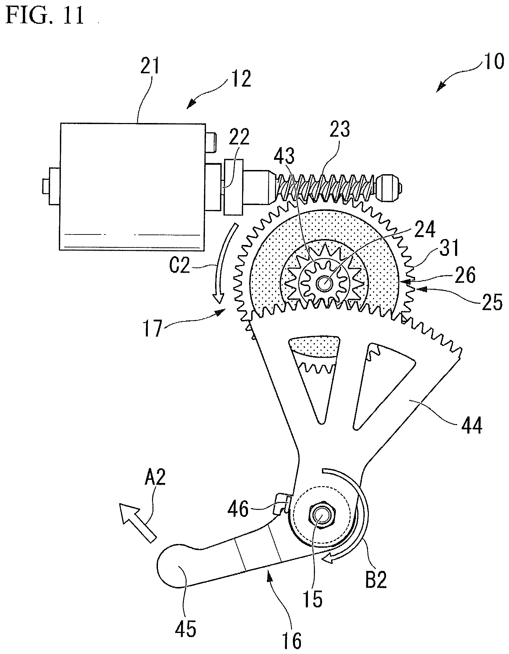

Fig. 11 is an explanatory view illustrating an operation of the operation pedal 4 when the pedal is returned and is a view corresponding to Fig. 6.

As illustrated in Fig. 11, when a pedaling force of the driver with respect to the operation pedal 4 (the pedal portion 6) is suddenly released from a state in which the operation pedal 4 is depressed, the operation pedal 4 is intended to be returned to the initial position (the return direction A2) by a restoring force of the return spring which is not illustrated. Then, the reaction force output part 16 receives a biasing force of the coil spring 46, follows a return motion of the operation pedal 4 and thus rotates toward the initial position (the return direction B2). When the reaction force output part 16 rotates in the return direction B2, a rotational force thereof is transmitted to the second rotating body 26 through the pinion gear 43, and thus the second rotating body 26 rotates before the first rotating body 25 in the return direction C2.

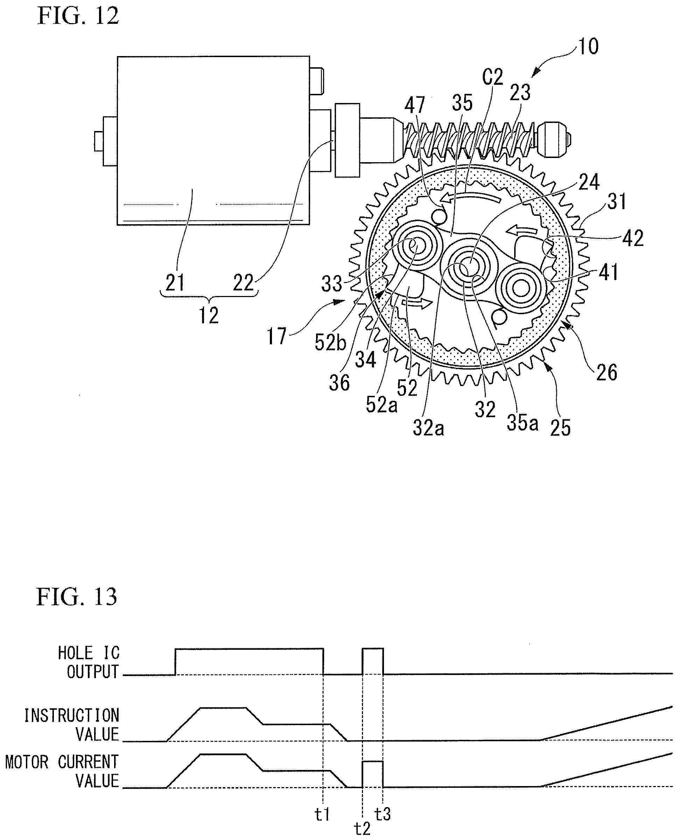

Fig. 12 is an explanatory view illustrating the operation when the pedal is returned and is a view corresponding to Fig. 4.

Here, as illustrated in Fig. 12, when the second rotating body 26 rotates in the return direction C2, the inclined surface 41b of the engagement portion 41 comes in contact with the sliding surface 52b of the clutch lever 36. In this state, the second rotating body 26 rotates in the return direction C2, and thus the sliding surface 52b and the inclined surface 41b are slid, and the clutch lever 36 is pressed toward the engagement release position around the clutch shaft 34 (in a direction against the basing force of the biasing member 47). Accordingly, the engagement between the clutch lever 36 and the engagement portion 41 is released, and thus only the second rotating body 26 rotates in the return direction C2 with respect to the first rotating body 25. Further, since the clutch lever 36 is biased toward the engagement position by the biasing member 47, the above-described operation is performed whenever the engagement portion 41 passes the clutch lever 36.

Therefore, the reaction force output part 16 rotates in the return direction B2 without being affected by the rotational friction of the motor 12, and follows the return motion of the operation pedal 4.

As described above, according to the embodiment, when the second rotating body 26 rotates before the first rotating body 25 in the return direction C2, the engagement portion 41 presses the clutch lever 36 of the first rotating body 25 toward the engagement release position in the rotating direction.

With a constitution, since the connection between the first rotating body 25 and the second rotating body 26 is released when the operation pedal 4 is suddenly returned, it is possible to inhibit the rotation of the output lever 45 in the return direction B2 from being hindered due to the rotational friction on the motor 12 side. Therefore, the output lever 45 can quickly follow the return motion of the operation pedal 4, and thus even when the operation pedal 4 is depressed again immediately thereafter, an output of the reaction force by the motor 12 can be quickly applied to the operation pedal 4.

Particularly, the embodiment was constituted such that, when the first rotating body 25 rotates before the second rotating body 26 in the return direction C2, the engagement portion 41 presses the clutch lever 36 in the extending direction and thus is engaged with the clutch lever 36.

With a constitution, since the engagement portion 41 and the clutch lever 36 are engaged in the extending direction of the clutch lever 36, the engagement portion 41 and the clutch lever 36 are easily engaged with each other, for example, compared to a constitution in which the engagement portion 41 and the clutch lever 36 are engaged in the rotating direction of the clutch lever 36.

Therefore, it is possible to reduce a radial height of the engagement portion 41, thereby narrowing a pitch between the adjacent engagement portions 41 in a circumferential direction. Therefore, the clutch lever 36 and the engagement portion 41 can be quickly engaged, and thus an idling amount of each of the first rotating body 25 and the second rotating body 26 can be reduced.

As a result, it is possible to enhance responsiveness of the reaction force output device 10, to improve an operation feeling and to reduce an impact sound generated when the clutch lever 36 and the engagement portion 41 are engaged.

Furthermore, in the embodiment, since the clutch lever 36 extends in a direction intersecting the radial direction of the first rotating body 25, a rotation range of the clutch lever 36 can be reduced, for example, compared with a constitution in which the clutch lever 36 extends in the radial direction of the first rotating body 25. Therefore, the impact sound generated when the clutch lever 36 and the engagement portion 41 are engaged can be reduced.

Further, since the engagement surface 52a of the clutch lever 36 is formed in a curved surface which protrudes outward in the extending direction, the clutch lever 36 is pressed toward a center of a curvature of the engagement surface 52a at the contact portion between the engagement surface 52a and the curved surface 41a. As a result, the clutch lever 36 can be effectively pressed in the extending direction of the clutch lever 36, and the engagement portion 41 and the clutch lever 36 can be more easily engaged.

Further, in the embodiment, since the adjacent engagement portions 41 in the circumferential direction are connected to each other through the curved portion 42 which protrudes outward in the radial direction, the pitch between the engagement portions 41 can be narrowed, and the clutch lever 36 and the engagement portion 41 can be quickly engaged.

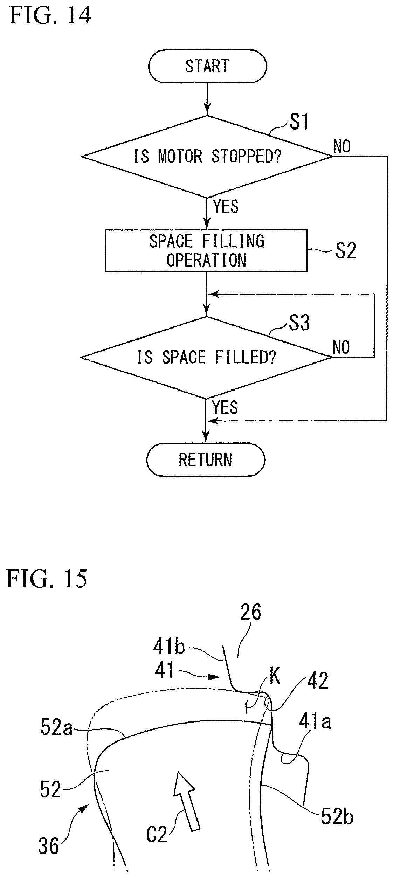

Furthermore, in the embodiment, when the rotation of the motor 12 is stopped, so-called idling suppression control in which the motor 12 is driven to fill a space K (refer to Fig. 15) between the engagement surface 52a of the clutch lever 36 and the curved surface 41a of the engagement portion 41 may be performed.

Fig. 13 is a time chart illustrating the idling suppression control. Also, Fig. 14 is a flowchart illustrating the idling suppression control. Further, an "instruction value" indicated in Fig. 13 is, for example, an opening instruction value of the throttle valve which is controlled by the host ECU according to the operation amount of the operation pedal 4. Further, the following routine is mainly performed by the control circuit of the circuit board 18.

First, as illustrated in Figs. 13 and 14, in step S1, it is determined whether or not the driving of the motor 12 is stopped based on a detection result of a Hall IC. Specifically, when an output voltage output from the Hall IC is not changed for a certain period of time (when it is zero), it is determined that the rotation of the motor 12 is stopped (time t1 to t2 in Fig. 13).

Then, when a determination result in step S1 is "YES" (when the driving of the motor 12 is stopped), step S2 is performed.

Meanwhile, when the determination result in step S1 is "NO" (when the motor 12 is being driven), it is determined that the above-described control of the reaction force is being performed and the clutch lever 36 and the engagement portion 41 are engaged, and thus the routine is terminated.

In step S2, a space filling operation is performed. Specifically, the motor 12 is driven to rotate in a forward direction. Then, as illustrated in Fig. 15, the driving force of the motor 12 is transmitted to the first rotating body 25 through the worm 23, and the first rotating body 25 rotates in the return direction C2 around the support pin 24, and thus the engagement surface 52a of the clutch lever 36 comes in contact with the curved surface 41a of the engagement portion 41. Accordingly, the space K between the engagement surface 52a of the clutch lever 36 and the curved surface 41a of the engagement portion 41 is filled. Further, in the space filling operation, a motor current value is set to such a degree that the driving force of the motor 12 does not rotate the clutch mechanism 17 in a connected state (only the first rotating body 25 is rotated). Therefore, the rotation of the first rotating body 25 in the return direction C2 is restricted in a state in which the engagement surface 52a of the clutch lever 36 is in contact with the curved surface 41a of the engagement portion 41.

Next, in step S3, it is determined whether or not a space between the clutch lever 36 and the engagement portion 41 is filled. In step S3, for example, when the output voltage output from the Hall IC is not changed for a certain time as determined by the same method as in the above-described step S1 (after time t3 in Fig. 13), it is determined that the space is not formed between the clutch lever 36 and the engagement portion 41. That is, in a state in which the space between the clutch lever 36 and the engagement portion 41 is filled, the motor 12 does not rotate, and thus the output voltage from the Hall IC becomes zero.

Additionally, when the determination result in step S3 is "YES," it is determined that the space between the clutch lever 36 and the engagement portion 41 is filled, and the routine is terminated.

Meanwhile, when the determination result in step S3 is "NO," it is determined that there is the space between the clutch lever 36 and the engagement portion 41 and the motor 12 is still rotating. In this case, the routine of step S3 is repeated.

Accordingly, the idling suppression control is terminated.

With a constitution, even in the case in which the circumferential space K is generated between the clutch lever 36 and the engagement portion 41 when the driving of the motor 12 is stopped at the time that the pedal is returned as described above, the space K can be filled up by the time of the depressing operation or the control of the reaction force after that. Therefore, when the first rotating body 25 and the second rotating body 26 relatively rotate in a direction in which the engagement surface 52a of the clutch lever 36 and the curved surface 41a of the engagement portion 41 approach each other, the idling amount of each of the first rotating body 25 and the second rotating body 26 is reduced, and the clutch lever 36 and the engagement portion 41 are rapidly engaged.

As a result, it is possible to enhance the responsiveness of the reaction force output device 10, to improve the operation feeling and to reduce the impact sound generated when the clutch lever 36 and the engagement portion 41 are engaged. Also, the above-described space filling operation may be performed when it is determined that the operation pedal 4 is at the initial position based on the opening instruction value of the throttle valve controlled by the host ECU.

Although the embodiment of the present invention has been described above in detail with reference to the drawings, the specific constitution is not limited to the embodiment, and design changes and the like are included within the scope that do not depart from the gist of the present disclosure.

For example, the reaction force output device 10 can be used to suppress sudden acceleration and can also be used to give a natural stepping feeling of the operation pedal 4 to the driver when a so-called drive-by-wire in which the connection between the operating pedal 4 and the throttle valve is omitted is applied.

Further, in the above-described embodiment, the case in which the reaction force output device 10 of the present disclosure is applied to the accelerator pedal apparatus 1 has been described. However, the present disclosure is not limited thereto and may be applied to a brake pedal, a steering wheel, an operation device of a game machine and so on.

Furthermore, in the above-described embodiment, the case in which the center of curvature of the engagement surface 52a coincides with the rotation center of the clutch lever 36 has been described, but it is not limited thereto. In this case, the present disclosure may have any constitution as long as the engagement portion 41 presses the clutch lever 36 through the engagement surface 52a in the extending direction (the engagement portion 41 presses the clutch lever 36 in a direction intersecting the rotating direction of the clutch lever 36). That is, as long as the clutch lever 36 does not rotate to the engagement release position due to the moment about the rotation center, there is no problem.

Further, the engagement surface 52a is not limited to the arc shape and may have a linear shape (of which a radius of curvature is infinite).

Further, the clutch lever 36 may have any direction as long as the extending direction thereof is a direction intersecting the radial direction.

Also, in the above-described embodiment, the case in which the clutch lever 36 is provided on the first rotating body 25 side and the engagement portion 41 is provided on the second rotating body 26 side has been described. However, the engagement portion 41 may be provided on the first rotating body 25 side, and the clutch lever 36 may be provided on the second rotating body 26 side.

In addition, the constituent elements in the above-described embodiment can be appropriately replaced with well-known constituent elements without departing from the spirit of the present invention.

### [Reference Signs List]

4 Operation pedal (operation portion)
10 Reaction force output device
12 Motor (drive source)
17 Clutch mechanism
25 First rotating body (one rotating body)
26 Second rotating body (other rotating body)
36 Clutch lever
41 Engagement portion
42 Curved portion
52a Engagement surface

## Claims

1. A reaction force output device comprising:
a drive source configured to output power to an operation portion in a direction opposite to an operating direction thereof; and
a clutch mechanism interposed between the operation portion and the drive source and configured to connect and disconnect transmission of the power to the operation portion,
wherein the clutch mechanism includes a first rotating body connected to the drive source side and to which the power of the drive source is transmitted, a second rotating body connected to the operation portion side, disposed coaxially with the first rotating body and configured to be relatively rotatable with respect to the first rotating body, a clutch lever rotatably supported by one rotating body of the first rotating body and the second rotating body, and a plurality of engagement portions disposed at the other rotating body of the first rotating body and the second rotating body in a circumferential direction thereof and engaged with the clutch lever,
the clutch lever rotates about a rotation shaft different from that of the one rotating body and extends in a direction intersecting a radial direction when viewed in plan view in an axial direction of the one rotating body, and a tip end surface thereof serves as an engagement surface engaged with the engagement portion, and
the engagement portion presses the clutch lever in an extending direction of the clutch lever through the engagement surface and is engaged with the clutch lever when the one rotating body rotates before the other rotating body, and presses the clutch lever with a circumference of the rotation shaft of the clutch lever and releases engagement of the clutch lever when the other rotating body rotates before the one rotating body.

2. The reaction force output device according to claim 1, wherein the engagement surface is a curved surface which protrudes outward in the extending direction of the clutch lever.

3. The reaction force output device according to claim 1 or 2, wherein the adjacent engagement portions in the circumferential direction are connected through the curved portion.

4. The reaction force output device according to any one of claims 1 to 3, wherein a control circuit configured to control driving of the drive source is provided, and the control circuit drives the drive source and engages the engagement surface of the clutch lever with the engagement portion when it is determined that the driving of the drive source is stopped for a predetermined time.
